# EUROPÄISCHE PATENTSCHRIFT

(11) **EP 0 901 982 B1**
(45) Veröffentlichungstag und Bekanntmachung des Hinweises auf die Patenterteilung: **05.12.2001**
(21) Anmeldenummer: 98117210.9
(22) Anmeldetag: 09.09.1998
(51) Int. Cl.: C01B 3/32, B01J 23/80

(54) **Verfahren und Katalysator zur Dampfreformierung von Methanol**
Process and catalyst for steam reforming of methanol
Procédé et catalyseur pour le reformage à la vapeur de méthanol

(30) Priorität: 10.09.1997 DE 19739773
(43) Veröffentlichungstag der Anmeldung: 17.03.1999
(73) Patentinhaber: BASF AKTIENGESELLSCHAFT, 67056 Ludwigshafen (DE)
(72) Erfinder: Kumberger, Otto Dr., 68163 Mannheim (DE); Sprague, Michael Jolyon Dr., 68161 Mannheim (DE); Hofstadt, Otto, 67122 Altrip (DE)
(74) Vertreter: Isenbruck, Günter

(56) Entgegenhaltungen:
- DE-C- 19 534 434
- US-A- 3 850 850
- US-A- 3 923 694
- PATENT ABSTRACTS OF JAPAN vol. 015, no. 197 (C-0833), 21. Mai 1991 & JP 03 052643 A (MITSUBISHI HEAVY IND LTD), 6. März 1991
- PATENT ABSTRACTS OF JAPAN vol. 095, no. 004, 31. Mai 1995 & JP 07 024320 A (AGENCY OF IND SCIENCE & TECHNOL), 27. Januar 1995

## Beschreibung

Die Erfindung betrifft ein Verfahren und einen Katalysator zur Dampfreformierung von Methanol.

Bei der Dampfreformierung von Methanol wird Methanol mit Wasser zu Wasserstoff und Kohlendioxid sowie Kohlenmonoxid umgesetzt. Neben industriellen Verfahren zur Synthesegaserzeugung sind insbesondere Anwendungen in mobilen Anlagen wie Brennstoffzellen wichtig. Brennstoffzellen benötigen Wasserstoff, der durch Dampfreformierung von Methanol gewonnen werden kann. Beispielsweise für Fahrzeugantriebe oder mobile Brennstoffzellen ist es dabei wichtig, die Dampfreformierung in einem kleinen Reaktor mit geringem Gewicht durchführen zu können. Dies wird insbesondere durch Katalysatoren ermöglicht, die die Umsetzung von Methanol und Wasser katalysieren und eine hohe Aktivität bei geringem Volumen aufweisen. Hierbei bietet sich die Konfektionierung in Tablettenform an, wobei die Tabletten möglichst geringe Ausmaße aufweisen sollen, um eine höhe Schüttdichte und ein hohes Verhältnis von Oberfläche zu Volumen zu erreichen.

Für die Dampfreformierung von Methanol sind unterschiedliche Katalysatoren bekannt.

In der EP-A-0 152 314 ist eine homogene Katalysatorzusammensetzung beschrieben, die Kupfer, Zink und Aluminium in oxidischer Form aufweist.

Die Katalysatorzusammensetzung wird hergestellt durch Fällen einer Lösung, die Kupfer-, Zink- und Aluminiumsalze enthält, bei einem pH-Wert im Bereich von 6,3 bis 7,3 mit einem Alkalimetallcarbonat oder Alkalimetallhydroxid. Nach Waschen, Trocknen und Calcinieren des Niederschlags wird ein oxidischer Katalysator erhalten, der zur Zersetzung eines primären Alkohols in ein Gemisch aus CO, CO₂ und Wasserstoff ermöglicht.

In JP-A-58193738 ist ein Katalysator zur Dampfreformierung von Methanol beschrieben. Der Katalysator wird aus Gamma-Aluminiumoxidpelets durch Tränken mit einer Lösung von Zinknitrat und Kupfernitrat, Trocknen und Calcinieren hergestellt.

JP-A-07024320 betrifft einen Katalysator zur Dampfreformierung von Methanol. Basische Kupfer- und Zinkcarbonate-Hydroxide oder -oxide werden mit Aluminiumoxidhydrat gemischt. Das erhaltene Gemisch wird erhitzt und reduziert. Das Gemisch wird durch Fällung einer wässrigen Lösung einer wasserlöslichen Kupferverbindung und einer wasserlöslichen Zinkverbindung durch Alkalilösungen erhalten.

US-A-3923694 offenbart einen Cu-Zn-AI-Katalysator für die Methanolsynthese. Der Katalysator wird mit dem folgenden Verfahren hergestellt. Es wird eine Lösung von Natriumaluminat und Zinknitrat gebildet. Diese Lösung wird bei 85°C durch Natriumcarbonatzugabe auf einen pH-Wert von 6.5 einstellt. Ein Niederschlag mit Spinellstruktur wird gebildet. Dieser Niederschlag kann getrocknet und calciniert werden, was aber nicht notwendig ist. Der Niederschlag wird mit Wasser gemischt. Eine wässerige Lösung von Kupfernitrat und Zinknitrat wird hinzugefügt. Nach Hinzufügen von Natriumcarbonat bei 85°C wird einen Niederschlag mittels Filtration abgetrennt. Der pH ist 6.5. Das bevorzugte Cu: Zn-Verhältnis liegt zwischen 2 und 3.Der Niederschlag wird bei 300° C calciniert.

Die beschriebenen Katalysatoren weisen nicht für alle Anwendungen eine ausreichend hohe Aktivität, bezogen auf das Katalysatorvolumen, auf.

Aufgabe der vorliegenden Erfindung ist die Bereitstellung von Katalysatoren für die Dampfreformierung von Methanol, die eine hohe Katalysatoraktivität, bezogen auf das Katalysatorvolumen, aufweisen und damit insbesondere für mobile Anwendungen in Brennstoffzellen vorteilhaft einsetzbar sind.

Zudem soll ein entsprechendes Verfahren zur Dampfreformierung von Methanol bereitgestellt werden.

Die Aufgaben werden erfindungsgemäß gelöst durch ein Verfahren zur Dampfreformierung von Methanol, bei dem Methanol und Wasser an einem Katalysator unter Bildung von Wasserstoff umgesetzt werden, dadurch gekennzeichnet, daß der Katalysator herstellbar ist durch
(a) Fällen einer Lösung von Zink- und Aluminiumsalzen, wobei das Atomverhältnis Zn:Al 1,1:1 bis 3:1 beträgt, mit einer Alkalicarbonat- oder -hydroxidlösung bei einem pH-Wert im Bereich von 5 bis 12 und einer Temperatur im Bereich von 20 bis 100°C,
(b) Abtrennen und Waschen des Niederschlags zur Entfernung von Alkaliionen,
(c) Trocknen des Niederschlags,
(d) Calcinieren des Niederschlags bei einer Temperatur im Bereich von 250 bis 800°C zu einem Mischoxid,
(e) Dispergieren des Mischoxids in einer sauren Lösung von Kupfer- und Zinksalzen, wobei in der Lösung das Atomverhältnis Cu:Zn 1:5 bis 20:1 beträgt,
(f) Fällen der Dispersion mit einer Alkalicarbonat- oder -hydroxidlösung bei einem pH-Wert im Bereich von 6 bis 9 und einer Temperatur im Bereich von 20 bis 100°C,
(g) Durchführen der Schritte (b) bis (d), wobei das Calcinieren bei einer Temperatur im Bereich von 200 bis 800°C erfolgt,
wobei die Lösungen in Schritten (a) und/oder (e) zusätzlich Salze oder Oxide von einem oder mehreren Elementen der Platinmetalle, der Gruppen 4, 5, 11 und der Lanthaniden des Periodensystems der Elemente enthalten können oder die Salze oder Oxide auf die Mischoxide aufgebracht sein können.

Ferner betrifft die Erfindung auch einen Teil der im vorstehenden Verfahren eingesetzten Katalysatoren. Sie betrifft einen Katalysator, herstellbar durch
(a) Fällen einer Lösung von Zink- und Aluminiumsalzen, wobei das Atomverhältnis Zn:Al 1,1:1 bis 3:1 beträgt, mit einer Alkalicarbonat- oder -hydroxidlösung bei einem pH-Wert im Bereich von 5 bis 12 und einer Temperatur im Bereich von 20 bis 100°C,
(b) Abtrennen und Waschen des Niederschlags zur Entfernung von Alkaliionen,
(c) Trocknen des Niederschlags,
(d) Calcinieren des Niederschlags bei einer Temperatur im Bereich von 250 bis 800°C zu einem Mischoxid,
(e) Dispergieren des Mischoxids in einer sauren Lösung von Kupfer-und Zinksalzen, wobei in der Lösung das Atomverhältnis Cu:Zn 1 : 5 bis 20 : 1 beträgt,
(f) Fällen der Dispersion mit einer Alkalicarbonat- oder -hydroxidlösung bei einem pH-Wert im Bereich von 6 bis 9 und einer Temperatur im Bereich von 20 bis 100°C,
(g) Durchführen der Schritte (b) bis (d),
wobei die Lösungen in Schritten (a) und/oder (e) zusätzlich Salze oder Oxide von einem oder mehreren Elementen der Platinmetalle, der Gruppen 4, 5, 11 und der Lanthaniden des Periodensystems der Elemente enthalten können oder die Salze oder Oxide auf die Mischoxide aufgebracht sein können.

Erfindungsgemäß wurde gefunden, daß Cu-Zn-Al-Oxidkatalysatoren eine hohe Aktivität bei niedrigen Temperaturen, einen geringen Aktivitätsverlust über die Laufzeit des Katalysators und eine gute mechanische Beständigkeit aufweisen. Die Aktivität des Katalysators, bezogen auf das Katalysatorvolumen, ist dabei größer als die Aktivität von bekannten Cu-Zn-Al-Oxidfällkatalysatoren, die durch gemeinsame Fällung der drei Komponenten in basischem Milieu erhalten werden. Durch die erfindungsgemäße zweistufige Fällung werden Katalysatoren erhalten, die ein vorteilhaftes Eigenschaftsspektrum zeigen.

Bei Cu-Zn-Al-Oxidkatalysatoren können durch Variation der Fällbedingungen und der Fällmethode die Aktivität und der Aktivitätsverlust eines Katalysators über die Zeit stark beeinflußt werden. Es wurde gefunden, daß erfindungsgemäß besonders aktive und aktivitätsbeständige Methanolreformierungskatalysatoren dadurch erhalten werden können, daß die Vermischung der drei Komponenten Kupfer, Zink und Aluminium nicht in einem Schritt erfolgt, sondern zunächst eine Zn-Al-Mischoxidverbindung erzeugt wird, die anschließend durch Calcinierung in eine zumindest teilweise säureunlösliche Phase umgewandelt wird, diese Phase in saurer Lösung suspendiert wird und anschließend in Gegenwart dieser Phase eine Cu-Zn-Mischoxidverbindung erzeugt wird. Unter Mischoxidverbindungen werden vorliegend Oxid-, Hydroxid-, aber auch Carbonat- und Hydroxycarbonatverbindungen verstanden.

In Schritt (a) wird eine Lösung von Zink- und Aluminiumsalzen, wobei das Atomverhältnis Zn:Al 1,1:1 bis 3:1, besonders bevorzugt 1,3:1 bis 3:1, insbesondere 1,2:1 bis 1,5:1 beträgt, mit einer Alkalicarbonat- oder -hydroxidlösung, vorzugsweise Natriumcarbonat oder -hydroxidlösung bei einem pH-Wert im Bereich von 5 bis 12, vorzugsweise 5,5 bis 9, besonders bevorzugt 6 bis 7 und einer Temperatur im Bereich von 20 bis 100°C, vorzugsweise 30 bis 70°C, besonders bevorzugt 30 bis 50°C gefällt.

Als Zink- und Aluminiumsalze können alle Salze verwendet werden, die in wässrigen Systemen löslich sind. Vorzugsweise handelt es sich um die entsprechenden Nitrate.

Als Zn-Al-Mischoxidverbindungen werden insbesondere Oxidverbindungen, wie Spinelle oder Spinell-Zinkoxid-Verbindungen erhalten. Beträgt das Atom-verhältnis Zn:Al 1:2, so werden überwiegend oder ausschließlich Spinelle gebildet. Bei einem Atomüberschuß von Zn gegenüber Al werden Spinell-Zinkoxid-Verbindungen bzw. Metalloxid-Spinell-Mischphasen gebildet. Letztere sind besonders bevorzugt.

Das erhaltene Fällungsprodukt bzw. der erhaltene Niederschlag wird in Schritt (b) vom Reaktionsgemisch abgetrennt, in der Regel abfiltriert, und durch Waschen des Niederschlags von Alkaliionen, in der Regel Alkalisalzen möglichst weitgehend befreit. Nach dem Trocknen des erhaltenen Niederschlags in Schritt (c) schließt sich in Schritt (d) das Calcinieren des Niederschlags bei einer Temperatur im Bereich von 250 bis 800°C, vorzugsweise 300 bis 600°C, besonders bevorzugt 400 bis 500°C zu einem Mischoxid an, wie es vorstehend beschrieben ist.

Anschließend wird das erhaltene Mischoxid in Schritt (e) in einer sauren Lösung von Kupfer- und Zinksalzen dispergiert. Diese Lösung ist, wie auch die vorstehend eingesetzte Lösung, vorzugsweise eine wässrige Lösung. In der Lösung beträgt das Atomverhältnis Cu:Zn 1 : 5 bis 20 : 1, vorzugsweise 1 : 1 bis 10 : 1, insbesondere 2 : 1 bis 7 : 1 . Sodann wird in Schritt (f) die Dispersion mit einer Alkali-Carbonat- oder -hydroxidlösung bei einem pH-Wert im Bereich von 6 bis 9, vorzugsweise 6,5 bis 8, besonders bevorzugt 6,7 bis 7,5 und einer Temperatur im Bereich von 20 bis 100°C, vorzugsweise 50 bis 90°C, besonders bevorzugt 60 bis 80°C gefällt. Dabei wird eine Cu-Zn-Mischoxidverbindung gefällt, worunter insbesondere auch Cu-Zn-Hydroxycarbonatverbindungen wie Aurichalcit- und Malachit-Verbindungen verstanden werden. Bevorzugt handelt es sich bei der Cu-Zn-Mischoxidverbindung um eine Cu-Zn-Hydroxycarbonatverbindung, die Malachitstruktur aufweist.

Insgesamt wird ein Mischoxid aus Zn-Al-Mischoxid und Cu-Zn-Mischoxid erhalten.

Nachfolgend werden als Schritt (g) die vorstehenden Schritte (b) bis (d) durchgeführt. Dabei beträgt die Temperatur beim Trocknen vorzugsweise 20 bis 400°C, besonders bevorzugt 50 bis 200°C, insbesondere 80 bis 130°C. Die Calcinierung erfolgt in diesem Schritt bei Temperaturen von 200 bis 800°C, vorzugsweise 250 bis 600°C, besonders bevorzugt 300 bis 500°C.

Die chemische Zusammensetzung der so hergestellten Katalysatoren kann in weiten Grenzen variieren. Vorzugsweise beträgt das Atomverhältnis Cu:Zn 1:5 bis 5:1, besonders bevorzugt 1:1 bis 4:1, insbesondere 2:1 bis 3:1. Das Atomverhältnis (Cu + Zn):Al beträgt vorzugsweise 99:1 bis 70:30, besonders bevorzugt 95:5 bis 80:20. Speziell bevorzugt ist ein Verhältnis Cu:Zn:Al von etwa 65:25:10.

Dies entspricht einer Zusammensetzung von etwa 67 Gew.-% CuO, 26,4 Gew. - % ZnO und 6,6 Gew.-% Al₂O₃ im fertigen Katalysator.

Die erfindungsgemäß hergestellten Katalysatoren weisen bei gleicher chemischer Bruttozusammensetzung eine wesentlich höhere Anfangsaktivität für die Methanolreformierung auf als nach bekannten Verfahren durch gemeinsame, gleichzeitige Fällung der drei Komponenten Cu, Zn und Al hergestellte Systeme.

Zusätzlich zu den drei Elementen Cu, Zn und Al können noch weitere Elemente in den Katalysator eingebracht werden, wie Platinmetalle, Elemente der Gruppen 4, 5, 11 und der Lanthaniden des Periodensystems der Elemente. Bevorzugte Beispiele sind Pd, Pt, Rh, Ru, Os, Au, Zr, Ti, V, Nb, Ta sowie de Lanthaniden. Sie können beispielsweise in Form von Salzen oder Oxiden den Lösungen in Schritten (a) und/oder (e) beigefügt werden oder als Salze oder Oxide auf die Mischoxide aufgebracht werden (Auftränken oder Mitfällung in mindestens einer der beiden Fällungsstufen).

Ein besonders bevorzugter Katalysator weist folgende Eigenschaften auf:

Beim Auflösen in 30 %iger Salpetersäure resultiert ein säureunlöslicher Rückstand. Dabei kann es sich um eine kristalline Verbindung mit Spinellstruktur (Zinkspinell oder Cu-Zn-Spinell) handeln, aber auch um eine amorphe säureunlösliche Verbindung. Beim Lösen von bekannten Cu-Zn-Al-Oxidkatalysatoren ergibt sich dagegen eine klare Lösung.

In der getrockneten Katalysatorvorstufe in Schritt (g) liegt vor der Endcalcinierung keine alle drei Elemente beinhaltende Phase vor. Es liegen eine Zn-Al-Phase und eine Cu-Zn-Phase vor. Bei der Zn-Al-Phase handelt es sich bevorzugt um eine Spinell-Phase, bei der Cu-Zn-Phase um eine Cu-Zn-Malachit-Mischkristallverbindung. Beide Verbindungen können im allgemeinen im XRD-Spektrum nachgewiesen werden. Bei den bekannten, durch gemeinsame Fällung erhaltenen Katalysatoren liegt eine Cu-Zn-Al-Mischoxidphase vor, die meist eine Hydrotalcid-Phase ist, wie im XRD-Spektrum erkennbar ist.

Die erfindungsgemäßen Katalysatoren können in jeder geeigneten Form konfektioniert werden. Die Aktivmasse kann in Form von Katalysatorformkörpern, als Monolith oder als auf einem Träger (Metall oder Keramik) aufgebrachte, katalytisch aktive Schicht eingesetzt werden. Als Katalysatoren werden im allgemeinen für Kompaktmethanolreformer Splittfraktionen eingesetzt. Eine mechanisch besonders stabile Katalysatorpelletform wird dagegen durch Tablettierung des Katalysatorpulvers erhalten. Um ein gutes Füllverhalten der Katalysatorpellets zu erreichen, werden bevorzugt Tabletten eingesetzt, die einen Durchmesser im Bereich von 0,8 bis 5 mm, vorzugsweise 0,8 bis 2,0 mm, insbesondere 1,0 bis 1,8 mm und eine Höhe im Bereich von 0,8 bis 5 mm, vorzugsweise 0,8 bis 2,0 mm, insbesondere 1,0 bis 1,8 mm aufweisen. Besonders bevorzugt sind Tabletten mit einem Durchmesser von 1,5 mm und einer Höhe von etwa 1,5 mm. Durch Tablettierung der erfindungsgemäßen Katalysatoren zu Tabletten dieser geringen Größe kann eine ausgezeichnete mechanische Beständigkeit der Tabletten erzielt werden, die mit einem hervorragenden Packungsverhalten im Katalysatorbett verbunden ist.

Vor dem Einsatz des Katalysators in einem Methanolreformierungsreaktor oder beim Einsatz darin wird das Kupferoxid im Katalysator zumindest teilweise in metallisches Kupfer umgewandelt. Dies kann beispielsweise durch Reduktion mit Wasserstoff oder einem Methanol/Wasserdampf-Gemisch erfolgen.

Die Dampfreformierung von Methanol wird dabei vorzugsweise bei einem Druck von 1 bis 25 bar, besonders bevorzugt 1 bis 5 bar und einer Temperatur von 180 bis 400°C, besonders bevorzugt 200 bis 350°C, durchgeführt. Das Molverhältnis von Wasser zu Methanol beträgt vorzugsweise 1 : 1 bis 2:1, besonders bevorzugt etwa 1,5:1.

Die Erfindung wird nachstehend anhand von Beispielen näher erläutert.

### Beispiele - Katalysatorherstellung

### Vergleichsbeispiel V1

Kupfernitrat (345.3 g einer 15.5 Gew.-% Cu enthaltenden salpetersauren Kupfer-Nitrat-Lösung), Zinknitrat (146.1 g einer 14.5 Gew.-% Zn enthaltenden salpetersäuren Zink-Nitrat-Lösung) und Aluminiumnitrat (48.6 g Aluminiumnitrat Nonahydrat, Fa. Merck) werden in 3,5 1 Wasser gelöst. Die Mengen der drei Nitratsalze sind so gewählt, daß die Lösung ein Gesamt-Atom-Verhältnis Cu:Zn:Al = 65:25:10 aufweist. Eine Lösung von 474 g Natriumcarbonat Na₂CO₃ in 2 l Wasser wird mit der beschriebenen Kupfer-Zink-Aluminiumnitratlösung bei einem Fäll-pH-Wert von 6.8 und einer Fälltemperatur von 70 °C unter Rühren vermischt. Der Zustrom von Natriumcarbonat und der Kupfer-Zink-Aluminium-Lösungen wird während des Fällvorganges so geregelt, daß der Fäll-pH-Wert während der gesamten Fällung zwischen 6.7 und 6.9 konstant gehalten wird. Die Fällung erfolgt in einem 1 l Fällgefäß, das intensiv gerührt wird (ca. 480 U/min). Die resultierende Fällsuspension wird über einen Überlauf kontinuierlich in einen Sammelbehälter überführt, der mit 150 U/min gerührt wird. Nach Abschluß der Fällung wird die resultierende Suspension noch 15 min bei 70°C gerührt. Das Fällprodukt wird anschließend Nitrat-frei gewaschen, 16 h bei 120°C getrocknet und das erhaltene Produkt 2 h unter Luft bei 350°C calciniert. Anschließend wird das Material (Bruttozusammensetzung des Katalysators bezogen auf Oxide: ca. 67 Gew.-% CuO, 26.4 Gew.-% ZnO, 6.6 Gew.-% Al₂O₃) mit 2 % Graphit versetzt, in einer Exzenterpresse zu Volltabletten (20 mm x 3 mm) kompaktiert, und die Volltabletten werden zu Splitt einer Kornfraktion von 1.6 - 2.5 mm zerkleinert. Der Katalysator weist eine BET-Oberfläche von 94 m²/g auf. Das Gesamtporenvolumen liegt bei 0.344 ml/g.

### Beispiel 2

### Herstellung des Zn-Al-Mischoxids

Die Fällung erfolgt in der Weise, daß eine Zn-Al-Nitratlösung, die durch Lösen von 320 g Zn(No₃)₂ 6 H₂O und 336.4 g Al/NO₃)₃ 9 H₂O in 600 ml Wasser erhalten wurde, und eine 20 Gew.-%ige Na₂CO₃-Lösung aus zwei getrennten Vorratsbehältern in einen Fällbehälter eingeleitet werden. Die Zugaberate der Zn-Al-Nitrat-Lösung wird in der Weise gesteuert, daß sich im Fällbehälter ein pH-Wert im Bereich von 6.7 bis 6.9 über die gesamte Fällzeit eingehalten wird. Die Temperatur während der Fällung beträgt 50 °C. Die Fällung erfolgt in einem 500 ml Fällgefäß, das mit ca. 350 U/min gerührt wird. Die resultierende Fällsuspension wird über einen Überlauf kontinuierlich in einen Sammelbehälter überführt, der mit 150 U/min gerührt wird. Nach Abschluß der Fällung wird die resultierende Suspension noch 30 min bei 50°C gerührt. Die Suspension wird filtriert, mit entionisiertem Wasser Nitrat-frei gewaschen, und anschließend 16 h bei 120°C getrocknet. Das so erhaltene Produkt wurde 2 h unter Luft bei 400°C calciniert.

### Herstellung des Cu-Zn-Al-Katalysators

In der II. Stufe der Katalysatorherstellung wird das wie vorstehend beschrieben hergestellte Zn-Al-Mischoxid (Atom-Verhältnis Zn:Al = 12:10) in einer salpetersauren Lösung von Kupfer- und Zinknitraten (Atom-Verhältnis Cu:Zn = 65:13) peptisiert bzw. unter Anlösen suspendiert. Die Mengen an Zn-Al-Mischoxid und Kupfer-Zinknitrat-Lösung werden so gewählt, daß die Suspension ein Gesamt-Atom-Verhältnis Cu:Zn:Al = 65:25:10 aufweist. Aus getrennten Vorratsgefäßen werden die Cu-Zn-Suspension und eine 20 Gew.-%ige Na₂CO₃-Lösung in einen 500 ml Fälltopf so eingeleitet, daß eine Parallelfällung des Kupfer-Zink-Aluminium-Hydroxycarbonats bei einem konstant gehaltenen pH-Wert von 6.7 bis 6.9 und einer konstanten Temperatur von 70 °C erfolgt. Die Fällung erfolgt in einem 500 ml Fällgefäß, das mit ca. 350 U/min gerührt wird. Die resultierende Fällsuspension wird über einen Überlauf kontinuierlich in einen Sammelbehälter überführt, der mit 150 U/min gerührt wird. Nach Abschluß der Fällung wird die resultierende Suspension noch 60 min bei 70°C gerührt. Die Suspension wird filtriert, mit entionisiertem Wasser Nitrat-frei gewaschen, und anschließend 16 h bei 120°C getrocknet. Das so erhaltene Produkt wird 4 h unter Luft bei 300°C calciniert.

Anschließend wird das Material (Bruttozusammensetzung des Katalysators bezogen auf Oxide: ca. 67 Gew.-% CuO, 26.4 Gew.-% ZnO, 6.6 Gew.-% Al₂O₃) mit 2 % Graphit versetzt, in einer Exzenterpresse zu Volltabletten (20 mm x 3 mm) kompaktiert, und die Volltabletten werden zu Splitt einer Kornfraktion von 1.6 - 2.5 mm zerkleinert. Der Katalysator weist eine BET-Oberfläche von 85 m²/g auf. Das Gesamtporenvolumen liegt bei 0.29 ml/g.

### Katalysatortests

Die erhaltenen Katalysatoren wurden zur Ermittlung der Aktivität als Splitt (1.6 - 2.5 mm Fraktion) in einen Differentialkreislauftestreaktor gegeben. In den Testreaktor wurden bei allen Versuchen 10 ml Katalysatorschüttung verdünnt in 40 ml Inertmaterial (Steatitkugeeln) eingesetzt (Abmessungen des Katalysatorbettes (mit Inertmaterial): Höhe ca. 18 mm; Durchmesser ca. 60 mm). Die Katalysatoren wurden mit Wasserstoffgas (1 % H₂ in N₂) bei 200 °C reduziert. Anschließend wurden die Katalysatoren mit Wasserdampf/Methanol-Gemisch (250 ml/h Gemisch; Molverhältnis: 1.5 Mol H₂O:1 Mol MeOH) beaufschlagt (Druck: 3 bar absolut). Das Wasserdampf/Methanol-Gemisch wurde in einem Vorverdampfer verdampft und anschließend über den Katalysator geleitet. Die Aktivität des Katalysators wurde bei 230 und 260°C ermittelt. Dazu wurde die erhaltene Gesamttrockengasmenge nach Abscheidung der flüchtigen Bestandteile Wasser und Methanol bestimmt. Die Zusammensetzung des Trockengases und insbesondere die Wasserstoffkonzentration im Trockengas wurden mit Hilfe einer GC-Analyse ermittelt. Aus der Gesamtgasmenge, der ermittelten Wasserstoffkonzentration und dem eingesetzten Katalysatorvolumen wurde anschließend die sog. Wasserstoffproduktionsrate als Aktivitätsmaß des Katalysators berechnet. Die Wasserstoffproduktionsrate gibt an, wieviel Wasserstoff aus dem Methanol/Wasserdampf-Gemisch bei der jeweiligen Temperatur an einem Liter Katalysator pro h produziert wird.

Bei der Standardversuchsdurchführung wurde der Katalysator 2 h bei 200°C betrieben (keine Analyse), anschließend 2 h bei 230°C (erste Aktivitätsbestimmung nach diesen 2 h), dann 2 h bei 260°C (zweite Aktivitätsbestimmung) und anschließend weitere 2 h bei 260°C (dritte Aktivitätsbestimmung nach diesen 2 h). Es ergaben sich folgende Wasserstoffproduktionsraten (in Nl/lKat.h):

| **Katalysator 1 (Vergleichsbeispiel):** | |
|---|---|
| nach 1 h bei 230°C | 7.7 Nl/lKat.h |
| nach 2 h bei 260°C | 10.5 Nl/lKat.h |
| nach 4 h bei 260°C | 9.8 Nl/lKat.h |

| **Katalysator 2 (erfindungsgemäß):** | |
|---|---|
| nach 2 h bei 230°C | 8.9 Nl/lKat.h |
| nach 2 h bei 260°C | 12.0 Nl/lKat.h |
| nach 4 h bei 260°C | 11.6 Nl/lKat.h |

Der erfindungsgemäße Katalysator ist durch höhere Anfangsaktivität gekennzeichnet und behält seinen Aktivitätsvorteil über den gesamten Versuchszeitraum bei.

## Patentansprüche

1. Katalysator, herstellbar durch
(a) Fällen einer Lösung von Zink- und Aluminiumsalzen, wobei das Atomverhältnis Zn:Al 1,1:1 bis 3:1 beträgt, mit einer Alkalicarbonat-oder -hydroxidlösung bei einem pH-Wert im Bereich von 5 bis 12 und einer Temperatur im Bereich von 20 bis 100°C,
(b) Abtrennen und Waschen des Niederschlags zur Entfernung von Alkaliionen,
(c) Trocknen des Niederschlags,
(d) Calcinieren des Niederschlags bei einer Temperatur im Bereich von 250 bis 800°C zu einem Mischoxid,
(e) Dispergieren des Mischoxids in einer sauren Lösung von Kupfer-und Zinksalzen, wobei in der Lösung das Atomverhältnis Cu:Zn 1:5 bis 20:1 beträgt,
(f) Fällen der Dispersion mit einer Alkalicarbonat- oder -hydroxidlösung bei einem pH-Wert im Bereich von 6 bis 9 und einer Temperatur im Bereich von 20 bis 100°C,
(g) Durchführen der Schritte (b) bis (d), wobei das Calcinieren bei einer Temperatur im Bereich von 200 bis 800°C erfolgt,
wobei die Lösungen in Schritten (a) und/oder (e) zusätzlich Salze oder Oxide von einem oder mehreren Elementen der Platinmetalle, der Gruppen 4, 5, 11 und der Lanthaniden des Periodensystems der Elemente enthalten können oder die Salze oder Oxide auf die Mischoxide aufgebracht sein können.

2. Katalysator nach Anspruch 1, **dadurch gekennzeichnet, daß** in Schritt (a) das Atomverhältnis Zn:Al 1,2:1 bis 3:1 beträgt.

3. Katalysator nach Anspruch 1 oder 2, **dadurch gekennzeichnet, daß** das Atom-verhältnis Cu:Zn 1:5 bis 5:1 und (Cu + Zn):Al 99:1 bis 70:30 beträgt.

4. Katalysator nach einem der Ansprüche 1 bis 3, **dadurch gekennzeichnet, daß** die Zink-, Aluminium- und/oder Kupfersalze Nitrate sind.

5. Katalysator nach einem der Ansprüche 1 bis 4, **dadurch gekennzeichnet, daß** die Lösungen in Schritten (a) und (e) keine zusätzlichen Salze oder Oxide enthalten und keine weiteren Salze und Oxide auf die Mischoxide aufgebracht sind.

6. Katalysator nach einem der Ansprüche 1 bis 5, **dadurch gekennzeichnet, daß** der Katalysator in Form von Tabletten mit einem Durchmesser im Bereich von 0,8 bis 5 mm und einer Höhe im Bereich von 0,8 bis 5 mm vorliegt.

7. Verfahren zur Herstellung von Katalysatoren nach einem der Ansprüche 1 bis 6, **dadurch gekennzeichnet, daß** man die angegebenen Verfahrensschritte durchführt.

8. Verwendung eines Katalysators, wie er in einem der Ansprüche 1 bis 6 definiert ist, zur Dampfreformierung von Methanol.

9. Verfahren zur Dampfreformierung von Methanol, bei dem Methanol und Wasser an einem Katalysator unter Bildung von Wasserstoff umgesetzt werden, **dadurch gekennzeichnet, daß** der Katalysator wie in einem der Ansprüche 1 bis 6 definiert ist.

## Claims

1. A catalyst preparable by
(a) precipitating a solution of zinc salts and aluminum salts, the atomic ratio of Zn:Al being from 1:1 to 3:1, with an alkali metal carbonate solution or alkali metal hydroxide solution at a pH in the range from 5 to 12 and at from 20 to 100°C,
(b) separating off and washing the precipitate to remove alkali metal ions,
(c) drying the precipitate,
(d) calcining the precipitate at from 250 to 800°C to give a mixed oxide,
(e) dispersing the mixed oxide in an acidic solution of copper salts and zinc salts, the atomic ratio of Cu:Zn being from 1:5 to 20:1 in the solution,
(f) precipitating the dispersion with an alkali metal carbonate solution or alkali metal hydroxide solution at a pH in the range from 6 to 9 and at from 20 to 100°C,
(g) carrying out the steps (b) to (d), the calcination being performed at from 200 to 800°C,
the solutions in steps (a) and/or (e) can additionally comprise salts or oxides of one or more elements selected from the group consisting of the platinum metals, groups 4, 5, 11 and the lanthanides of the Periodic Table of the Elements, or the salts or oxides can be applied to the mixed oxides.

2. A catalyst as claimed in claim 1, wherein, in step (a), the atomic ratio of Zn:Al is from 1.2:1 to 3:1.

3. A catalyst as claimed in claim 1 or 2, wherein the atomic ratio of Cu:Zn is from 1:5 to 5:1 and (Cu + Zn):Al is from 99:1 to 70:30.

4. A catalyst as claimed in any of claims 1 to 3, wherein the zinc salts, aluminum salts and/or copper salts are nitrates.

5. A catalyst as claimed in any of claims 1 to 4, wherein the solutions in steps (a) and (e) do not comprise additional salts or oxides and no further salts and oxides are applied to the mixed oxides.

6. A catalyst as claimed in any of claims 1 to 5, wherein the catalyst is present in the form of tablets having a diameter in the range from 0.8 to 5 mm and a height in the range from 0.8 to 5 mm.

7. A process for preparing catalysts as claimed in any of claims 1 to 6, which comprises the specified process steps being carried out.

8. The use of a catalyst as defined in any of claims 1 to 6 for steam-reforming methanol.

9. A process for steam-reforming methanol, which comprises reacting methanol and water over a catalyst with formation of hydrogen, wherein the catalyst is as defined in any of claims 1 to 6.

## Revendications

1. Catalyseur, pouvant être préparé par
(a) précipitation d'une solution de sels de zinc et d'aluminium, le rapport atomique Zn:Al étant de 1,1:1 à 3:1, avec une solution de carbonate ou d'hydroxyde alcalin à un pH dans l'intervalle de 5 à 12 et à une température dans l'intervalle de 20 à 100°C,
(b) séparation et lavage du précipité pour l'élimination d'ions d'alcali,
(c) séchage du précipité,
(d) calcination du précipité à une température dans l'intervalle de 250 à 800°C pour former un oxyde mixte,
(e) dispersion de l'oxyde mixte dans une solution acide de sels de cuivre et de zinc, dans la solution le rapport atomique Cu:Zn étant de 1:5 à 20:1,
(f) précipitation de la dispersion avec une solution de carbonate ou d'hydroxyde alcalin à un pH dans l'intervalle de 6 à 9 et à une température dans l'intervalle de 20 à 100°C,
(g) exécution des étapes (b) à (d), la calcination étant effectuée à une température dans l'intervalle de 200 à 800°C,
les solutions dans les étapes (a) et/ou (e) pouvant contenir en outre des sels ou des oxydes d'un ou plusieurs éléments des métaux du groupe du platine, des groupes 4, 5, 11 et des lanthanides de la classification périodique des éléments, ou les sels ou oxydes pouvant être disposés sur les oxydes mixtes.

2. Catalyseur selon la revendication 1, **caractérisé par le fait que** dans l'étape (a) le rapport atomique Zn:Al est de 1,2:1 à 3:1.

3. Catalyseur selon la revendication 1 ou 2, **caractérisé par le fait que** le rapport atomique Cu:Zn est de 1:5 à 5:1 et (Cu + Zn):Al est de 99:1 à 70:30.

4. Catalyseur selon l'une des revendications 1 à 3, **caractérisé par le fait que** les sels de zinc, d'aluminium et/ou de cuivre sont des nitrates.

5. Catalyseur selon l'une des revendications 1 à 4, **caractérisé par le fait que** les solutions dans les étapes (a) et (e) ne contiennent pas de sels ou oxydes additionnels et que l'on ne dépose pas d'autres sels ou oxydes sur les oxydes mixtes.

6. Catalyseur selon l'une des revendications 1 à 5, **caractérisé par le fait que** le catalyseur est sous forme de comprimés ayant un diamètre dans l'intervalle de 0,8 à 5 mm et une hauteur dans l'intervalle de 0,8 à 5 mm.

7. Procédé pour la préparation de catalyseurs selon l'une des revendications 1 à 6, **caractérisé par le fait qu'**on réalise les étapes opératoires indiquées.

8. Utilisation d'un catalyseur, tel qu'il est défini dans l'une des revendications 1 à 6, pour le reformage à la vapeur du méthanol.

9. Procédé pour le reformage à la vapeur du méthanol, dans lequel on fait réagir du méthanol et de l'eau sur un catalyseur avec formation d'hydrogène, **caractérisé par le fait que** le catalyseur est tel que défini dans les revendications 1 à 6.
